# EUROPÄISCHE PATENTANMELDUNG

(11) **EP 1 211 785 A2**
(43) Veröffentlichungstag der Anmeldung: **05.06.2002**
(21) Anmeldenummer: 01127886.8
(22) Anmeldetag: 23.11.2001
(51) Int. Cl.: H02K 15/00, H02K 15/12, B23Q 3/154, H02N 15/00

(54) **Vorrichtung zum halten eines leitenden Bauteils**

(30) Priorität: 30.11.2000 DE 10059384
(71) Anmelder: ALSTOM Power N.V., 1101 CS Amsterdam (NL)
(72) Erfinder: Baumann, Thomas, Dr., 5430 Wettingen (CH); Bock, Albrecht, 79801 Hohentengen (DE); Oesterheld, Jörg, Dr., 5413 Birmenstorf (CH)
(74) Vertreter: Liebe, Rainer

(57) **Zusammenfassung**

Die Erfindung betrifft insbesondere eine Vorrichtung (1) zum Bearbeiten eines elektrisch leitenden Bauteils (3). Die Vorrichtung (1) weist Positioniermittel (2) auf, die das zu bearbeitende Bauteil (3) in einer Bearbeitungsposition positionieren. Die Positioniermittel (2) weisen Mittel (13) zur Erzeugung eines Magnetfeldes auf. Das Magnetfeld erzeugt Kräfte, die berührungslos am Bauteil (3) wirken und so die Positionierung des Bauteils (3) bewirken oder unterstützen.

## Beschreibung

### Technisches Gebiet

Die Erfindung betrifft eine Vorrichtung zum Bearbeiten eines elektrisch leitenden oder permanentmagnetischen Bauteils mit den Merkmalen des Oberbegriffs des Anspruchs 1. Die Erfindung betrifft ausserdem ein Verfahren zur Herstellung einer Beschichtung an einem elektrisch leitenden oder permanentmagnetischen Bauteil.

Von besonderem Interesse sind dabei Bauteile in Form von elektrischen Leitern oder Leiterbündeln, die mit einer elektrischen Isolierung versehen werden müssen. Derartige isolierte elektrische Leiter kommen insbesondere bei rotierenden elektrischen Maschinen, z.B. bei Generatoren, in Form von Statorspulen, Roebelstäben und Erregerleitern zum Einsatz. Weitere Beispiele für mögliche Anwendungen sind Schaltanlagen und Transformatoren.

### Stand der Technik

Bei einer herkömmlichen Vorgehensweise zum Isolieren von Leitern oder Leiterbündeln einer rotierenden elektrischen Maschine werden Bänder, die z.B. aus einem Glasfaserträger und Glimmerpapier bestehen, auf den Leiter, z.B. ein Statorleiter, lagenförmig und spiralförmig aufgewickelt, bis eine gewünschte Isolierdicke erreicht ist. Ein derartiges Isolierband sowie ein zugehöriges Verfahren sind beispielsweise in der EP 0 790 623 B1 beschrieben.

Durch eine Imprägnierung, z.B. in einem geeigneten Kunstharz, kann verbleibende Luft aus dem so entstandenen Isolierwickel verdrängt werden, wobei gleichzeitig die Bandlagen miteinander verkleben. Durch Aushärtung in einer geeigneten Form erhält die Isolierung ihre Endform.

Bei moderneren Verfahren zur Herstellung einer Isolierung wird ein geeignetes pulverförmiges oder flüssiges Isoliermittel auf das zu isolierende Bauteil aufgetragen. Beispielsweise durch ein entsprechendes Sprühverfahren oder ein anderes geeignetes Beschichtungsverfahren.

Bei grösseren Bauteilen, die einer derartigen Bearbeitung unterzogen werden müssen, besteht jedoch das Problem, dass sich diese Bauteile aufgrund ihres Eigengewichtes durchbiegen, wenn sie nur an ihren Endabschnitten unterstützt sind. Wenn jedoch eine Beschichtung, insbesondere eine Isolierung in einem derart verformten Zustand aufgebracht wird, kann es im Einbauzustand des jeweiligen Bauteiles zu Beschädigungen der Beschichtung bzw. der Isolierung kommen. Dieses Problem stellt sich z.B. bei stabförmigen Leitern, die eine Länge von mehreren Metern aufweisen können. Um die genannten Nachteile zu vermeiden kommen beispielsweise Wickelroboter zum Einsatz, die mehrere Greifzangen aufweisen, die den stabförmigen Leiter an mehreren Stellen greifen und somit stützen. Um den Leiter dann im Bereich einer solchen Greifzange bewickeln zu können, öffnet sich die jeweilige Greifzange und fährt automatisch weg. Ist die Bewicklung der jeweiligen Haltestelle durchgeführt, fährt die jeweilige Greifzange wieder zurück in ihre Halteposition und schliesst sich wieder, um die Unterstützung des Leiters wieder herzustellen. Eine derartige Vorgehensweise ist jedoch für solche Beschichtungen ungeeignet, die mit Beschichtungsmitteln arbeiten, die direkt nach ihrem Auftrag aushärten müssen. Denn die vorgenannten Haltezangen können erst dann wieder in ihre Halteposition zurückfahren und am Bauteil zur Unterstützung angreifen, wenn dieser Aushärtevorgang an der jeweiligen Haltestelle abgeschlossen ist. Ein Zahlenbeispiel soll hier die Problematik verdeutlichen: Ein stabförmiger Leiter soll in einem Abschnitt von 10 m Länge mit einer Isolierung versehen werden. Um eine Durchbiegung des Stabes zu verhindern ist der Stab in dem zu beschichtenden Abschnitt mit 10 Greifzangen fixiert. Die Isolierung soll mit Hilfe eines Spritzverfahrens aufgebracht werden, das beispielsweise mit einer Auftragungsgeschwindigkeit von 1 m/sek. arbeitet. Das Aushärten des aufgespritzten Isoliermittels soll im Beispiel 1 min. dauern. Dementsprechend muss das Auftragspritzen nach dem Überfahren jeder Haltestelle für etwa 1 min. unterbrochen werden beziehungsweise die Auftragsgeschwindigkeit auf 1 m/min reduziert werden, bis die jeweils gelöste Haltezange wieder ihre Stützfunktion erfüllen kann. Insgesamt ergibt sich somit eine Gesamtbeschichtungszeit von etwa 10 min. Die Beschichtung eines derartigen Leiters dauert somit sehr viel länger als der eigentliche Spritzprozess mit 1 m/sek. Eine Beschleunigung der Beschichtung kann zwar dadurch realisiert werden, dass weniger Stützstellen vorgesehen werden, jedoch muss dann wieder eine zunehmende Durchbiegung in Kauf genommen werden. Ausserdem weist die mit einem derart häufig unterbrochenen Spritzverfahren aufgetragene Beschichtung keine besonders hohe Güte, insbesondere Homogenität auf.

### Darstellung der Erfindung

Die vorliegende Erfindung beschäftigt sich mit dem Problem, für die Bearbeitung eines elektrisch leitenden oder permanentmagnetischen Bauteils, insbesondere für die Herstellung einer Beschichtung an einem solchen Bauteil, Möglichkeiten aufzuzeigen, die eine rasche Bearbeitung bzw. Beschichtung des Bauteils ermöglichen.

Erfindungsgemäss wird dieses Problem durch eine Vorrichtung mit den Merkmalen des Anspruchs 1 gelöst.

Die Erfindung beruht auf dem Gedanken, das Bauteil zumindest in dem zu bearbeitenden Abschnitt berührungslos mittels magnetischer Felder, beziehungsweise mittels der mechanischen Kräfte, welche diese magnetischen Felder bewirken, zu positionieren. Da für die Positionierung im jeweils zu bearbeitenden Abschnitt kein körperlicher Kontakt zwischen dem Bauteil und irgendwelchen Abstützmitteln, wie z.B. Greifzangen, erforderlich ist, kann es im Falle der Auftragung einer auszuhärtenden Beschichtung auch nicht zu einer störenden Interaktion zwischen diesen Abstützmitteln und der aufgetragenen, jedoch noch nicht ausgehärteten Beschichtung kommen. Im Hinblick auf das obenstehende Zahlenbeispiel wird der Vorteil der Erfindung besonders klar: Zur Beschichtung eines 10 m langen stabförmigen Leiters wird nunmehr nur noch etwa 1 min benötigt. Darüber hinaus kann die Beschichtung in dem berührungslos positionierten Abschnitt mit einer hohen Qualität realisiert werden.

Das physikalische Prinzip der berührungslosen magnetischen Positionierung ist die Tatsache, dass Körper, welche ein magnetisches Feld erzeugen, aufeinander anziehende oder abstossende mechanische Kräfte ausüben. Die mechanischen Kräfte sind hierbei senkrecht zu den magnetischen Feldern gerichtet. Parallel gerichtete Magnetfelder verursachen anziehende Kräfte, antiparallel gerichtete Magnetfelder abstossende Kräfte. Für das Auftreten von mechanischen Kräften zwischen den Körpern ist es unabdingbar, dass beide Körper ein Magnetfeld erzeugen. Die erfindungsgemässe berührungslose Positionierung verlangt daher, dass das Werkstück selber in der Lage ist, ein Magnetfeld zu erzeugen. Die Positionierung des Werkstückes erfolgt dann - allgemein gesprochen - durch Überlagerung des Magnetfeldes, welches das Werkstück ausübt, mit einem Magnetfeld, welches ein oder mehrere geeignet ausgeformte Magnetfeldererzeugungsmittel ausüben. Vorzugsweise sind diese externen Magnetfelderzeugungsmittel (MEM) so ausgebildet, dass sie der Gewichtskraft des Bauteils entgegenwirken. Durch diese Massnahme wird eine schwerkraftbedingte Durchbiegung des Bauteils reduziert.

Bei einer besonders vorteilhaften Ausführung kann das MEM so ausgebildet sein, dass die durch die Magnetfelder erzeugten Kräfte so dimensioniert sind, dass sie eine durch die Schwerkraft bedingte Durchbiegung des Bauteiles zumindest im zu bearbeitenden Teil im Wesentlichen kompensieren. Bei dieser Ausführungsform können optimale Werte für eine aufzutragende Beschichtung erzielt werden.

Magnetische Felder werden erzeugt einerseits durch Magnetisierung von ferromagnetischen Materialien (Permanentmagnete), andererseits durch Bestromung von elektrisch leitfähigen Materialien. Da es ungleich viel mehr elektrisch leitfähige Materialien gibt als permanentmagnetische Materialien, ist dies der technisch wichtigere Fall. Die vorliegende Erfindung kommt somit bevorzugt bei Werkstücken aus elektrisch leitfähigen Materialien zur Anwendung. Zweckmässig ist dabei die Verwendung zeitlich konstanter Magnetfelder und von Gleichstrom, da nur dadurch auch eine zeitlich konstante Positionierung erreicht werden kann. Selbstverständlich ist es auch mit Gleichstrom möglich, durch Einstellung der Stromstärke die Position des Werkstückes geeignet zu regeln.

Gemäss einer Weiterbildung können die Magnetfelderzeugungsmittel so ausgebildet sein, dass die durch das Magnetfeld erzeugten Kräfte Komponenten aufweisen, die quer zur Schwerkraft gerichtet sind, symmetrisch auf das Bauteil einwirken und dieses zentrieren. Durch diese Massnahmen wird eine seitliche Führung und Stabilisierung des Bauteils in seiner Bearbeitungsposition realisiert.

Entsprechend einer besonderen Ausgestaltungsform der vorliegenden Erfindung können die Magnetfelderzeugungsmittel eine elektrische Leiteranordnung aus wenigstens einem elektrischen Leiter aufweisen, wobei die Leiteranordnung an eine Stromversorgung angeschlossen ist und sich unterhalb oder oberhalb des jeweiligen Bauteils in derselben Richtung wie das Bauteil erstreckt, wobei die Magnetfelderzeugungsmittel ausserdem elektrische Anschlussmittel aufweisen, mit denen das Bauteil an eine Stromversorgung anschliessbar ist, wobei zur Positionierung des Bauteils in dessen Bearbeitungsposition die elektrische Leiteranordnung und das Bauteil so bestromt sind, dass zwischen dem Bauteil und der Leiteranordnung eine Abstossungskraft oder eine Anziehungskraft ausgebildet ist, welche die Positionierung des Bauteils bewirkt oder unterstützt. Eine derartige Ausführungsform ist vor allem dann sinnvoll, wenn es sich beim zu bearbeitenden Bauteil um ein relativ langgestrecktes Bauteil, insbesondere um ein stabförmiges Bauteil, wie z.B. einen elektrischen Leiter oder ein Leiterbündel beispielsweise einer rotierenden elektrischen Maschine, handelt. Sofern die Leiteranordnung oberhalb des Bauteils angeordnet ist, werden Bauteil und Leiteranordnung mit gleichsinnig gerichteten, also parallelen Strömen beaufschlagt, um eine Anziehungskraft zu erzeugen. Wenn jedoch die Leiteranordnung unterhalb des Bauteils angeordnet ist, werden Bauteil und Leiteranordnung mit gegensinnig gerichteten, also antiparallelen Strömen beaufschlagt, um Abstossungskräfte zu erzeugen.

In einer weiteren, besonderen Ausgestaltungsform der vorliegenden Erfindung besteht das MEM aus einer Leiteranordnung aus einem Spulensystem der oben beschriebenen Art, welches auf einem Kern aus ferromagnetischem Material, beispielsweise ferritischer Stahl, ausgebildet ist. Durch die hohe magnetische Permeabilität wird das magnetische Feld des MEM bedeutend erhöht, was eine bedeutende Erhöhung der mechanischen Kräfte bedeutet.

Das der vorliegenden Erfindung zugrundeliegende Problem wird auch durch ein Verfahren mit den Merkmalen des Anspruchs 14 gelöst.

Die Erfindung beruht hierbei auf dem allgemeinen Gedanken, die Positionierung des Bauteils zumindest in einem zu beschichtenden Abschnitt durch magnetische Kräfte zu bewirken, die derart dimensioniert sind, dass das Bauteil zumindest in dem zu beschichtenden Abschnitt frei schwebt und somit ohne körperlichen Kontakt beschichtet werden kann. Von besonderem Vorteil ist auch hier, dass der zu beschichtende Abschnitt komplett mit einem kontinuierlichen Beschichtungsvorgang beschichtet werden kann, wodurch sich eine Qualitätssteigerung der Beschichtung erzielen lässt.

Weitere wichtige Merkmale und Vorteile der Erfindung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert. Es zeigen, jeweils schematisch,
- Fig. 1: eine Seitenansicht auf eine stark vereinfacht dargestellte Vorrichtung nach der Erfindung bei deaktivierten Magnetfelderzeugungsmitteln,
- Fig. 2: eine Ansicht wie in Fig. 1, jedoch bei aktivierten Magnetfelderzeugungsmitteln,
- Fig. 3: eine Ansicht wie in Fig. 2, jedoch bei deaktivierten Unterstützungsmitteln,
- Fig. 4: eine Prinzipdarstellung des Feldlinienverlaufs in einer Ebene quer zur Längsrichtung eines zu bearbeitenden Bauteils bei einer ersten Ausführungsform einer parallel zum Bauteil verlaufenden elektrischen Leiteranordnung mit antiparalleler Bestromung,
- Fig. 5: eine Ansicht wie in Fig. 4, jedoch bei einer zweiten Ausführungsform der Leiteranordnung,
- Fig. 6: eine Ansicht wie in Fig. 4, jedoch bei einer dritten Ausführungsform der Leiteranordnung,
- Fig. 7: eine Ansicht wie in Fig. 4, jedoch bei einer vierten Ausführungsform der Leiteranordnung.

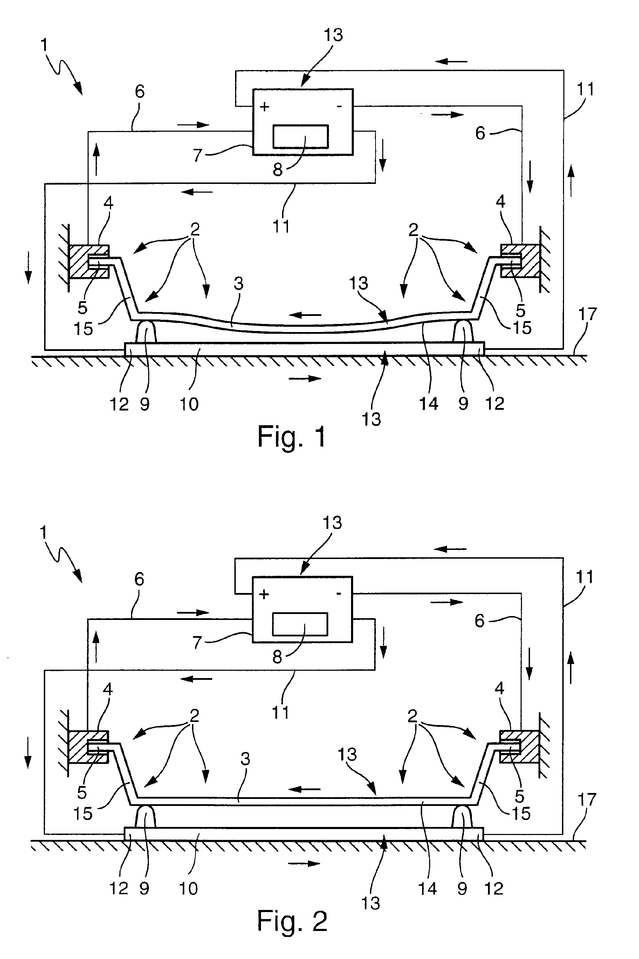

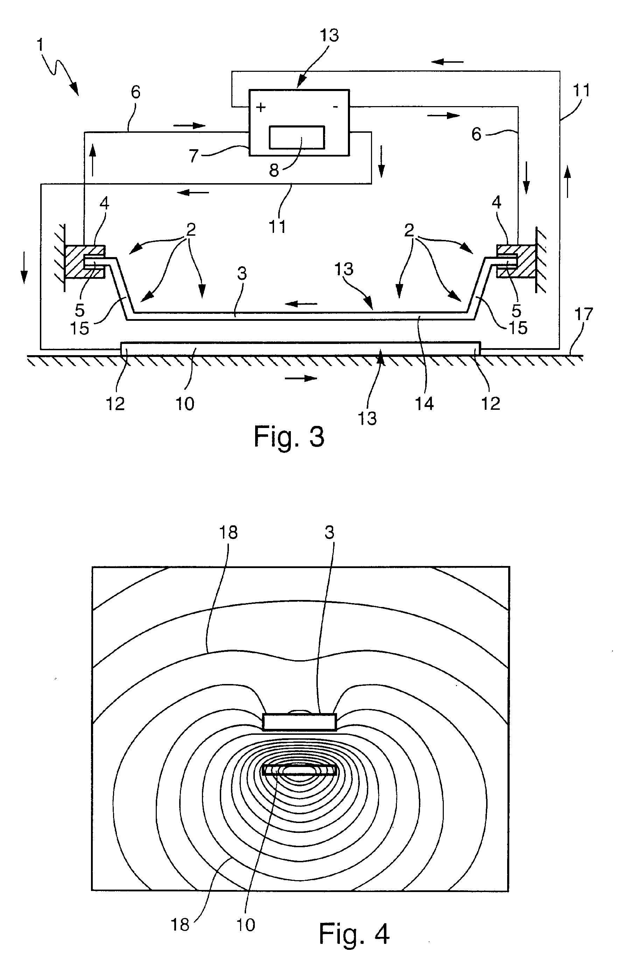

Entsprechend den Fig. 1 bis 3 weist eine erfindungsgemässe Vorrichtung 1 Positioniermittel 2 auf, mit deren Hilfe ein Bauteil 3 in einer Bearbeitungsposition positionierbar ist. Diese Bearbeitungsposition ist in den Fig. 2 und 3 wiedergegeben.

Das Bauteil 3 besteht aus einem elektrisch leitenden Material und ist im vorliegenden Ausführungsbeispiel durch einen band- oder stabförmigen elektrischen Leiter gebildet, der beispielsweise in einer rotierenden elektrischen Maschine, z.B. Turbogenerator, Verwendung findet. Das Bauteil 3 kann beispielsweise ein sogenannter Roebelstab sein. Das Bauteil 3 ist im vorliegenden Ausführungsbeispiel so aufgebaut, dass ein mittlerer zu bearbeitender Abschnitt 14 an seinen Enden jeweils über einen abgewinkelten Abschnitt 15 mit Endabschnitten 5 verbunden ist.

Die Positioniermittel 2 weisen Haltemittel 4 auf, die an den Endabschnitten 5 des Bauteils 3 angreifen, um dieses dort zu fixieren. Die Haltemittel 4 bilden somit eine Halterung für das Bauteil 3 und können beispielsweise durch Spannzangen oder dergleichen gebildet sein. Die Haltemittel 4 sind im vorliegenden Ausführungsbeispiel gleichzeitig als elektrische Anschlüsse ausgebildet, die über entsprechende Stromleitungen 6 mit einer Stromversorgung 7 verbunden sind. Diese Stromversorgung 7 weist eine Steuerung 8 auf, die es ermöglicht, die Anschlüsse bzw. Haltemittel 4 mit Strom zu beaufschlagen. Die Stromflussrichtung ist hierbei für einen bestimmten Zeitpunkt durch Pfeile symbolisiert.

Die Positioniermittel 2 weisen ausserdem Unterstützungsmittel 9 auf, die das Bauteil 3 von unten gegenüber einer elektrischen Leiteranordnung 10 abstützen. Die Unterstützungsmittel 9 bestehen aus einem elektrisch isolierenden Werkstoff und sind so dimensioniert, dass das Bauteil 3 die Leiteranordnung 10 bei einer schwerkraftbedingten Durchbiegung nicht berührt. Diese durch die Schwerkraft verursachte Durchbiegung des Bauteils 3 ist in Fig. 1 dargestellt.

Die elektrische Leiteranordnung 10 besteht aus einem oder mehreren elektrischen Leitern, die bei der hier dargestellten Ausführungsform durch einen oder mehrere parallel zueinander verlaufende Stäbe gebildet sind, die auf einem Boden 17 aufliegen. Dabei ist die Leiteranordnung 10 gleichgerichtet zum Bauteil 3 orientiert, so dass im Ausführungsbeispiel die Längsrichtungen des Bauteils 3 sowie der Leiteranordnung 10 horizontal verlaufen und in der Zeichnungsebene liegen.

Die Leiteranordnung 10 ist an ihren Enden 12 über geeignete Stromleitungen 11 ebenfalls mit der Stromversorgung 7 verbunden. Dabei ist zu beachten, dass die Enden 12 der Leiteranordnung 10 und die Enden 5 des Bauteils 3 gegensinnig, also antiparallel an die Stromversorgung 7 angeschlossen sind.

### Die erfindungsgemässe Vorrichtung 1 arbeitet wie folgt:

Das zu bearbeitende Bauteil 3 wird auf die Unterstützungsmittel 9 aufgelegt und an seinen Enden 5 an den Haltemitteln 4 fixiert. Da die Haltemittel 4 als Anschlussmittel ausgebildet sind, werden die Enden 5 durch die Fixierung automatisch an die Stromversorgung 7 angeschlossen. Aufgrund des Eigengewichts des Bauteils 3 kommt es zwischen seinen Enden 5 zu einer schwerkraftbedingten Durchbiegung gemäss Fig. 1.

Die Positioniermittel 2 weisen Magnetfelderzeugungsmittel 13 auf, deren wesentliche Bestandteile durch die Leiteranordnung 10, das Bauteil 3 und die Stromversorgung 7 gebildet sind. In Fig. 1 sind diese Magnetfelderzeugungsmittel 13 deaktiviert, so dass das Bauteil 3 die in Fig. 1 wiedergegebene, durchhängende bzw. durchgebogene Form einnimmt, die jedoch für die beabsichtigte Bearbeitung des Bauteils 3 ungeeignet ist.

In Fig. 2 sind die Magnetfelderzeugungsmittel 13 aktiviert. Zu diesem Zweck bewirkt die Steuerung 8 eine Strombeaufschlagung des Bauteils 3 sowie der Leiteranordnung 10. Aufgrund der herrschenden physikalischen Gesetze wird dadurch ein Magnetfeld erzeugt, das eine gegenseitige Abstossung zwischen Bauteil 3 und Leiteranordnung 10 zur Folge hat. Dabei sind die Positionierung der Leiteranordnung 10 und die angelegten Ströme so gewählt, dass sich das Bauteil 3 in dem zu bearbeitenden Abschnitt 14 im wesentlichen horizontal ausrichtet.

Vorzugsweise wird die Anzahl der Leiter der Leiteranordnung 10, deren räumliche Anordnung sowie deren Bestromung so gewählt, dass die schwerkraftbedingte Durchbiegung des Bauteils 3 kompensiert ist. Dabei muss nicht die vollständige Gewichtskraft von den Magnetfelderzeugungsmitteln 13 aufgebracht werden, da ein Teil der Gewichtskraft von den Haltemitteln 4 aufgenommen wird.

Entsprechend Fig. 3 sind die Unterstützungsmittel 9 so ausgebildet, dass sie deaktiviert bzw. entfernt werden können, so dass das Bauteil 3 in seinem zu bearbeitenden Abschnitt 14 ausschliesslich von den magnetischen Kräften unterstützt ist. Wie aus Fig. 3 besonders eindrücklich hervorgeht, stellt sich bei aktivierten Magnetfelderzeugungsmitteln 13 und bei deaktivierten Unterstützungsmitteln 9 quasi ein Schwebezustand für das Bauteil 3 ein, bei dem das Bauteil 3 in seinem zu bearbeitenden Abschnitt 14 berührungslos unterstützt ist. In diesem Zustand kann nun die gewünschte Bearbeitung des Bauteils 3 durchgeführt werden. Beispielsweise soll das Bauteil 3 mit einer isolierenden Beschichtung ausgestattet werden, die z.B. durch ein Sprühverfahren aufgebracht wird. Dabei kann ein aushärtendes Isoliermaterial verwendet werden, das erst nach einer Aushärtungszeit mechanischen Beanspruchungen ausgesetzt werden kann.

Nach dem Aushärten der jeweiligen Beschichtung können die Unterstützungsmittel 9 wieder aktiviert werden. Nach der Deaktivierung der Magnetfelderzeugungsmittel 13 kann dann das bearbeitete bzw. beschichtete Bauteil 3 der Vorrichtung 1 wieder entnommen werden.

Während die Unterstützungsmittel 9 in der hier beschriebenen Ausführungsform lediglich zwei Auflagerstellen umfassen, können bei einer anderen Ausführungsform beliebig komplizierte und beliebig aufwendige Stützkonstruktionen vorgesehen sein, die insbesondere auch bei deaktivierten Magnetfelderzeugungsmitteln 13 eine schwerkraftbedingte Durchbiegung des Bauteils 3 verhindern.

Bei der hier dargestellten Ausführungsform handelt es sich beim Bauteil 3 wie oben erläutert um einen langgestreckten elektrischen Leiter einer elektrischen Maschine, der im zu bearbeitenden Abschnitt einen geradlinigen Verlauf aufweist. Die Erfindung ist jedoch ebenso auf andere elektrisch leitende Bauteile mit beliebigen Formen anwendbar. Denn auch für beliebig geformte Bauteile 3 kann eine geeignete Leiteranordnung 10 gefunden werden, die ein Magnetfeld erzeugt, dessen Kräfte die schwerkraftbedingten Durchbiegungen dieses komplex geformten Bauteils 3 kompensieren. Zur Ermittlung einer geeigneten Leiteranordnung 10 kann das Bauteil 3 in infinitesimale Stücke zergliedert werden, denen dann entsprechende Abschnitte der Leiteranordnung 10 zugeordnet werden. Dabei kann das geeignete Magnetfeld auch durch eine entsprechende Formgebung und/oder räumliche Positionierung der Leiteranordnung 10 generiert werden.

Entsprechend Fig. 4 besteht der Leiteranordnung 10 bei einer besonders einfachen Ausführungsform aus einem einzelnen Leiter, der stabförmig ausgebildet ist und grundsätzlich einen beliebigen Querschnitt aufweisen kann. In der vorliegenden Ausführungsform ist jedoch ein Rechteckquerschnitt gewählt, da auch das darüber angeordnete Bauteil 3 einen entsprechenden Rechteckquerschnitt besitzt. Bei einem einzelnen Leiter 10 verlaufen die zwischen Leiter 10 und Bauteil 3 wirksamen Abstossungskräfte nur in einer vertikalen Längsmittelebene exakt vertikal. Der sich ausbildende Feldlinienverkauf des induzierten Magnetfeldes ist durch einzelne Feldlinien 18 symbolisch dargestellt. Die magnetischen Abstossungskräfte sind somit im Hinblick auf die Positionierung des Bauteils 3 senkrecht oberhalb des Leiters 10 relativ instabil bzw. labil, so dass eine seitliche Abstützung des Bauteils 3 erforderlich sein kann. Diese seitliche Abstützung kann bei kürzeren Bauteilen 3 ohne weiteres durch die Haltemittel 4 realisiert werden. Bei längeren Bauteilen 3 können zusätzliche Massnahmen erforderlich sein.

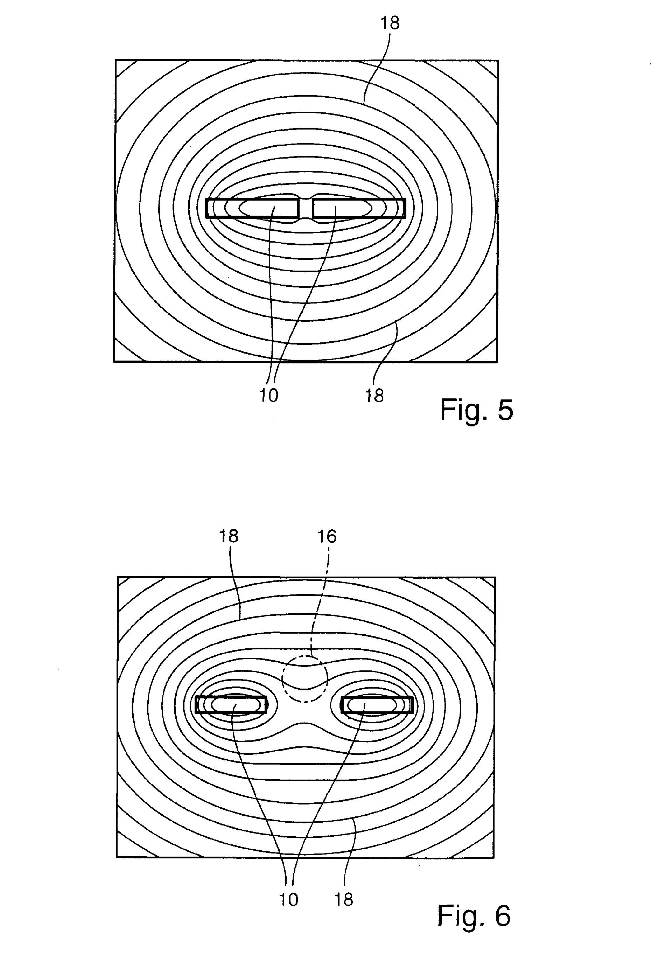

Gemäss Fig. 5 kann die Leiteranordnung 10 aus einer Anordnung von zwei stabförmigen Leitern gebildet sein, die nebeneinander und parallel zueinander angeordnet sind. Diese Leiteranordnung 10 ist konsequenter Weise gleichsinnig, also parallel durchströmt. Die daraus resultierenden Feldlinien 18 verlaufen oberhalb der Leiteranordnung 10 flacher als bei dem einzelnen Leiter gemäss Fig. 4. Auf diese Weise wird die Labilität des oberhalb der Leiteranordnung 10 in der Schwebe gehaltenen Bauteils 3 reduziert und die Stabilität erhöht. Das Bauteil 3 ist in Fig. 5 nicht dargestellt.

Bei Fig. 6 ist der Abstand zwischen den beiden Leitern der Leiteranordnung 10 zusätzlich vergrössert. Durch diese Massnahme wird ein Magnetfeld generiert, dessen Feldlinien 18 im Bereich einer vertikalen Längsmittelebene eine Mulde ausbilden. Der Bereich dieser Mulde ist in Fig. 6 mit 16 bezeichnet. Bei einer Anordnung des Bauteils 3 im Bereich dieser Mulde 16 greifen am Bauteil 3 magnetische Kräfte an, die Komponenten mit einer zentrierenden Wirkung aufweisen. Diese Zentrierung folgt aus Kräften, die quer zur Längsrichtung des Bauteils 3 und quer zur Schwerkraft an beiden Seiten des Bauteils 3 symmetrisch angreifen. Dementsprechend ergibt sich für das Bauteil 3 dann eine stabile Positionierung, die ohne mechanische seitliche Abstützungen auskommt.

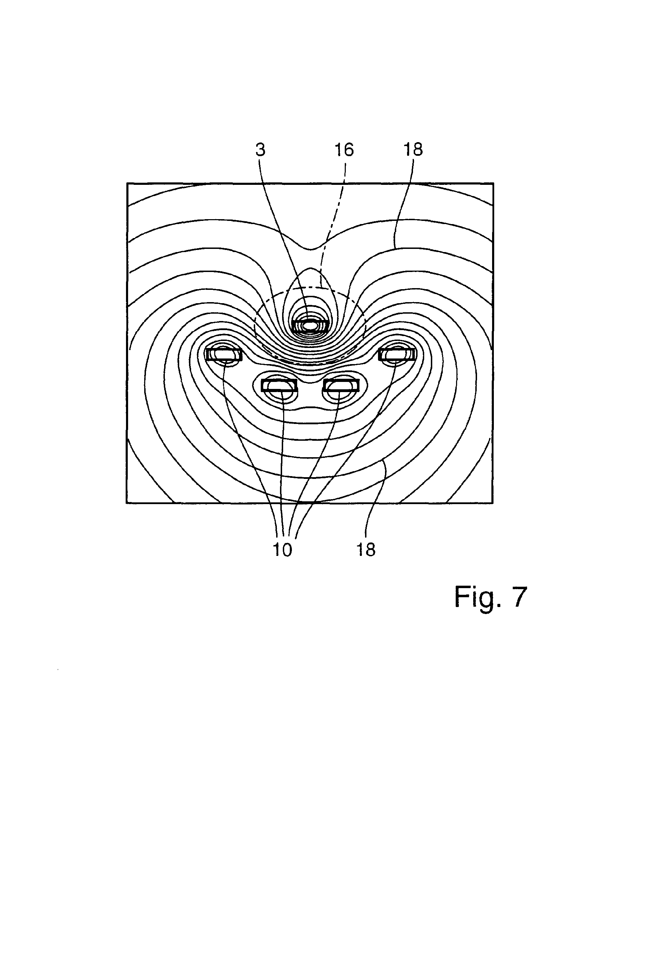

In Fig. 7 ist eine weitere Ausführungsform angegeben, bei der die Ausbildung der Mulde 16 oberhalb der Leiteranordnung 10 zusätzlich verstärkt ist. Diese Verstärkung wird dabei mit Hilfe von zwei zusätzlichen Leiterstäben realisiert, die bezüglich der horizontalen Längsmittelebene weiter aussen und bezüglich der weiter innenliegenden Leiterstäbe weiter oben angeordnet sind. Diese Massnahme verstärkt die stabile Lage des Bauteils 3, das sich oberhalb der Leiteranordnung 10 in einem Schwebezustand befindet.

### Bezugszeichenliste

- 1: Vorrichtung
- 2: Positioniermittel
- 3: Bauteil
- 4: Haltemittel
- 5: Endabschnitt von 3
- 6: Stromleitung
- 7: Stromversorgung
- 8: Steuerung
- 9: Unterstützungsmittel
- 10: Leiter/Leiteranordnung
- 11: Stromleitung
- 12: Ende von 10
- 13: Magnetfelderzeugungsmittel
- 14: zu bearbeitender Abschnitt von 3
- 15: abgewinkelter Abschnitt von 3
- 16: Mulde in den Feldlinien
- 17: Boden
- 18: Feldlinie

## Patentansprüche

1. Vorrichtung zum Bearbeiten eines gleichstromdurchflossenen oder permanentmagnetischen Bauteils (3), mit Positioniermitteln (2), die das zu bearbeitende Bauteil (3) in einer Bearbeitungsposition positionieren, **dadurch gekennzeichnet,dass** die Positioniermittel (2) Magnetfelderzeugungsmittel (13) zur Erzeugung eines Magnetfeldes aufweisen, das Kräfte erzeugt, die berührungslos am Bauteil (3) wirken und so die Positionierung des Bauteils (3) bewirken oder unterstützen.

2. Vorrichtung nach Anspruch 1, **dadurch gekennzeichnet, dass** die Magnetfelderzeugungsmittel (13) so ausgebildet sind, dass die durch das Magnetfeld erzeugten Kräfte der Gewichtskraft des Bauteils (3) entgegenwirken.

3. Vorrichtung nach Anspruch 2, **dadurch gekennzeichnet, dass** die Magnetfelderzeugungsmittel (13) so ausgebildet sind, dass die durch das Magnetfeld erzeugten Kräfte so dimensioniert sind, dass sie eine durch die Schwerkraft bedingte Durchbiegung des Bauteils (3) zumindest in einem zu bearbeitenden Abschnitt (14) im wesentlichen kompensieren.

4. Vorrichtung nach einem der Ansprüche 1 bis 3, **dadurch gekennzeichnet, dass** die Magnetfelderzeugungsmittel (13) so ausgebildet sind, dass das Bauteil (3) in seiner Bearbeitungsposition zumindest in einem zu bearbeitenden Abschnitt (14) berührungslos positioniert ist.

5. Vorrichtung nach einem der Ansprüche 1 bis 4, **dadurch gekennzeichnet, dass** die Magnetfelderzeugungsmittel (13) so ausgebildet sind, dass die durch das Magnetfeld erzeugten Kräfte Komponenten aufweisen, die quer zur Schwerkraft gerichtet sind und symmetrisch auf das Bauteil (3) einwirken und dieses zentrieren.

6. Vorrichtung nach einem der Ansprüche 1 bis 5, **dadurch gekennzeichnet,**
- **dass** die Magnetfelderzeugungsmittel (13) eine elektrische Leiteranordnung (10) aus mindestens einem elektrischen Leiter aufweisen, wobei die Leiteranordnung (10) an eine Stromversorgung (7) angeschlossen ist und sich unterhalb oder oberhalb des Bauteils (3) in derselben Richtung wie das Bauteil (3) erstreckt, und
- **dass** die Magnetfelderzeugungsmittel (13) elektrische Anschlussmittel (4) aufweisen, mit denen das Bauteil (3) an eine Stromversorgung (7) anschliessbar ist, wobei zur Positionierung des Bauteils (3) in dessen Bearbeitungsposition die Leiteranordnung (10) und das Bauteil (3) so bestromt sind, dass zwischen dem Bauteil (3) und der Leiteranordnung (10) eine Abstossungskraft oder eine Anziehungskraft ausgebildet ist, welche die Positionierung des Bauteils (3) bewirkt oder unterstützt.

7. Vorrichtung nach Anspruch 6, **dadurch gekennzeichnet, dass** die Leiteranordnung in Form einer Spule um einen Kern aus ferromagnetischem Material, vorzugsweise ferritischer Stahl, ausgebildet ist.

8. Vorrichtung nach einem der Ansprüche 1 bis 7, **dadurch gekennzeichnet, dass** die Positioniermittel (2) Haltemittel (4) aufweisen, die das zu bearbeitende Bauteil (3) in dessen Bearbeitungsposition an seinen Endabschnitten (5) fixieren.

9. Vorrichtung nach einem der Ansprüche 6 bis 8, **dadurch gekennzeichnet, dass** die Haltemittel (4) gleichzeitig die elektrischen Anschlussmittel bilden.

10. Vorrichtung nach einem der Ansprüche 1 bis 9, **dadurch gekennzeichnet, dass** das Bauteil (3) ein elektrischer Leiter oder ein Leiterbündel ist.

11. Vorrichtung nach einem der Ansprüche 1 bis 10, **dadurch gekennzeichnet, dass** das Bauteil (3) ein elektrischer Leiter oder ein Leiterbündel einer rotierenden elektrischen Maschine ist.

12. Vorrichtung nach einem der Ansprüche 1 bis 11, **dadurch gekennzeichnet, dass** die Bearbeitung des Bauteils (3) aus der Herstellung einer elektrischen Isolierung des Bauteils (3) besteht.

13. Vorrichtung nach einem der Ansprüche 1 bis 12, **dadurch gekennzeichnet, dass** die Bearbeitung des Bauteils (3) aus einem Spritzvorgang zur Herstellung einer Beschichtung des Bauteils (3) besteht.

14. Verfahren zur Herstellung einer Beschichtung an einem elektrisch leitenden Bauteil (3), mit folgenden Schritten:
A: Einbringen des Bauteils (3) in eine Halterung (4), die das Bauteil (3) ausserhalb eines zu beschichtenden Abschnitts (14) fixiert,
B: Aktivieren von Magnetfelderzeugungsmitteln (13) zur Erzeugung eines Magnetfeldes, das Kräfte erzeugt, die berührungslos am Bauteil (3) wirken, derart, dass das Bauteil (3) zumindest in dem zu beschichtenden Abschnitt (14) frei schwebt,
C: Durchführung der Beschichtung.

15. Verfahren nach Anspruch 14, **dadurch gekennzeichnet, dass** die Magnetfelderzeugungsmittel (13) elektrische Anschlussmittel (4) besitzen und eine elektrische Leiteranordnung (10) aus mindestens einem elektrischen Leiter aufweisen, der sich unterhalb oder oberhalb des Bauteils (3) in der Richtung des Bauteils (3) erstreckt, wobei vor dem Schritt B das Bauteil (3) ausserhalb des zu beschichtenden Abschnitts (14) an Endabschnitten (5) mit den elektrischen Anschlussmitteln (4) verbunden wird und wobei die Aktivierung der Magnetfelderzeugungsmittel (13) durch eine parallele oder antiparallele Bestromung der Leiteranordnung (10) und des Bauteils (3) erfolgt.

16. Verfahren nach Anspruch 14 oder 15, **dadurch gekennzeichnet, dass** die Anzahl, Anordnung und Formgebung der elektrischen Leiter der Leiteranordnung (10) so gewählt ist, dass das erzeugte Magnetfeld die durch die Schwerkraft bedingte Durchbiegung des Bauteils (3) zumindest im zu beschichtenden Abschnitt 14 im wesentlichen kompensiert.

17. Verfahren nach einem der Ansprüche 14 bis 16, **dadurch gekennzeichnet, dass** die Anzahl, Anordnung und Formgebung der elektrischen Leiter der Leiteranordnung (10) so gewählt ist, dass das erzeugte Magnetfeld das Bauteil (3) quer zu seiner Erstreckungsrichtung und quer zur Schwerkraft zentriert.

18. Verfahren nach einem der Ansprüche 14 bis 17, **dadurch gekennzeichnet, dass** Unterstützungsmittel (9) vorgesehen sind, die das Bauteil (3) zumindest in dem zu beschichtenden Abschnitt (14) gegen schwerkraftbedingte Durchbiegung unterstützen, wobei diese Unterstützungsmittel (9) während Schritt C entfernt oder deaktiviert sind.
